# EUROPEAN PATENT APPLICATION

(11) **EP 4 654 104 A1**
(43) Date of publication of application: **26.11.2025**
(21) Application number: 25160068.0
(22) Date of filing: 25.02.2025
(51) Int. Cl.: G06Q 10/0639, G06Q 50/26

(54) **ENVIRONMENTAL LOAD CALCULATION APPARATUS**

(30) Priority: 24.05.2024 JP 2024084857
(71) Applicant: Hitachi, Ltd., Tokyo 100-8280 (JP)
(72) Inventor: HONG, Younjeong, Tokyo, 100-8280 (JP); KATSUMURA, Yoshiteru, Tokyo, 100-8280 (JP); SHIMIZU, Yuuki, Tokyo, 100-8280 (JP)
(74) Representative: Mewburn Ellis LLP

(57) **Abstract**

An environmental load calculation apparatus of the present disclosure includes: a design tool unit that designs at least one of a product and a component constituting the product; an environmental load calculation unit that calculates an environmental load of at least one of the product and the component; and an environmental load visualization unit that displays the environmental load, in which the environmental load calculation unit calculates the environmental load based on at least one of a configuration, a function, a manufacturing process, and a reliability of the component, and an assembly process and a reliability of the product, and when the environmental load has not reached a target value, the design tool unit executes the design again before the design is completed. Thus, it is possible to reduce the environmental load of the product and shorten the time required for designing the product.

## Description

### Technical Field

The present disclosure relates to an environmental load calculation apparatus.

### Background Art

As environmental regulations in each country are expanding and strengthening, the development of products with a low environmental load is becoming indispensable in manufacturing. In the development of such products, a product design requiring a reduction of the environmental load, a reuse of parts, a recycling of materials used for parts and the like are required for a life cycle as well as a quality, a cost and a performance.

Patent Literature 1 discloses an environmental load evaluation apparatus in which a definition unit defines each process data of a life cycle related to an evaluation target of an environmental load evaluation using one system element (power amount), and the environmental load evaluation unit performs an environmental load evaluation based on the each process data defined by the power amount, so that even when the each process data dynamically changes, the environmental load evaluation can be performed by immediately reflecting the change.

Patent Literature 2 discloses an environmentally conscious design support apparatus which includes: a product-specific environmental load storage means for storing a component, a material and a process of a product and the like together with an environmental load; an environmental load evaluation means for evaluating an environmental load of the product; an application-conditioned improvement plan storage means for storing an improvement plan together with a precondition; and an improvement plan applicability determination means for determining whether or not an improvement plan stored in the application-conditioned improvement plan storage means can be applied to the product stored in the product-specific environmental load storage means from a configuration of the component, the material, and the process of the product stored in the product-specific environmental load storage means and the improvement plan stored in the application-conditioned improvement plan storage means; and an improvement effect evaluation means for evaluating an effect when the improvement plan is applied to the product determined to be applicable by the improvement plan applicability determination means. Patent Literature 2 discloses that, by using this environmentally conscious design support apparatus, the improvement effect over a life cycle can be calculated without a trial and error process by taking into consideration a trade-off of an improvement plan for a certain product and developing the improvement plan to another product.

### Citation List

### Patent Literatures

Patent Literature 1: Japanese Patent Application Laid-Open No. 2014-16802
Patent Literature 2: Japanese Patent Application Laid-Open No. 2008-210305

### Summary of Invention

### Problems to be resolved by the Invention

In a design of a product, it is necessary to evaluate an environmental load in addition to a function and a performance of the product.

In Patent Literatures 1 and 2, although the environmental load evaluation is described, a cooperation with a design tool is not described. Therefore, in Patent Literatures 1 and 2, it is considered that the environmental load evaluation is performed after the design of the product is completed. When the product is designed according to this procedure, the design data that is not necessarily required for the environmental load evaluation may be examined and acquired. In this case, if the design is repeated until a target value is reached in the environmental load evaluation, similar design work may end up being repeated.

An object of the present disclosure is to reduce an environmental load of a product and to shorten the time required for designing the product.

### Means of Solving the Problems

An environmental load calculation apparatus of the present disclosure includes: a design tool unit that designs at least one of a product and a component constituting the product; an environmental load calculation unit that calculates an environmental load of at least one of the product and the component; and an environmental load visualization unit that displays the environmental load. The environmental load calculation unit calculates the environmental load based on at least one of a configuration, a function, a manufacturing process, and a reliability of the component, and an assembly process and a reliability of the product, and when the environmental load has not reached a target value, the design tool unit executes the design again before the design is completed.

### Advantageous Effects of the Invention

According to the present disclosure, it is possible to reduce an environmental load of a product and shorten the time required for designing the product.

### Brief Description of Drawings

FIG. 1 is a configuration diagram illustrating a hardware of an environmental load calculation apparatus according to an Example.
FIG. 2 is a flowchart illustrating a processing in the environmental load calculation apparatus according to the Example.
FIG. 3 is a diagram illustrating an example of an operation display of a design tool of the environmental load calculation apparatus according to the Example.
FIG. 4 is a diagram illustrating an example of a display when an alert is issued in a determination of an environmental load of the environmental load calculation apparatus according to the Example.
FIG. 5 is a diagram illustrating an overall configuration and a processing in each of constituent elements of the environmental load calculation apparatus according to the Example.
FIG. 6 is a diagram illustrating a processing in the environmental load calculation apparatus according to the Example.

### Description of Embodiments

Hereinafter, embodiments and examples of the present disclosure will be described with reference to the drawings. The embodiments and examples are illustrative for describing the present disclosure, and omissions and simplifications are made as appropriate for clarity of the description. The present disclosure can be implemented in various other forms. Unless otherwise limited, the respective constituent elements may be singular or plural.

Positions, sizes, shapes, ranges etc. of the constituent elements shown in the drawings may not represent actual positions, sizes, shapes, ranges etc. in order to facilitate understanding of the invention. Therefore, the present disclosure is not necessarily limited to the positions, sizes, shapes, ranges etc. disclosed in the drawings.

Examples of the various types of information include expressions such as "table", "list", "queue", and the like, but the various types of information may be expressed in a data structure other than these. For example, various kinds of information such as "XX table", "XX list", and "XX queue" may be "XX information". In describing the identification information, expressions such as "identification information", "identifier", "name", "ID", and "number" are used, but these expressions can be replaced with each other.

When there are a plurality of constituent elements having the same or similar functions, the same reference numerals may be given different subscripts and explained. In addition, in a case where it is not necessary to distinguish the plurality of constituent elements, the subscripts may be omitted for explanation.

In some Examples, a processing performed by executing a program is described. Here, a computer executes a program by a processor (e.g., a CPU, GPU), and performs a process defined by the program using a storage resource (e.g., a memory), an interface device (e.g., a communication port), and the like. Therefore, a main body of the processing performed by executing the program may be a processor. Similarly, the main body of the processing performed by executing the program may be a controller, an apparatus, a system, a computer, or a node having a processor. The main body of the processing performed by executing the program may be an arithmetic unit, and may include a dedicated circuit that performs specific processing. Here, the dedicated circuitry is, for example, FPGA (Field Programmable Gate Array), ASIC (Application Specific Integrated Circuit), CPLD (Complex Programmable Logic Device), etc.

The program may be installed in a computer from a program source. The program source may be, for example, a program distribution server or a computer-readable storage medium. When the program source is a program distribution server, the program distribution server may include a processor and a storage resource for storing the program to be distributed, and the processor of the program distribution server may distribute the program to be distributed to another computer. Further, in the Examples, two or more programs may be realized as one program, or one program may be realized as two or more programs.

An environmental load calculation apparatus according to an embodiment of the present disclosure includes a design tool unit (a design tool function), an environmental load calculation unit, and an environmental load visualization unit. In other words, it is an apparatus in which an environmental load calculation function is added to a 3D-CAD (three-dimension Computer-Aided Design) that is a conventional design tool unit. That is, this apparatus is capable of inputting an environmental target, calculating an environmental load and the like when a user (a designer, etc.) of the 3D-CAD designs a product, a component etc. In this case, it is also possible to input (change) the environmental target, calculate the environmental load and the like in the middle of the design. In addition, the 3D-CAD may include a CAE (Computer Aided Engineering) that is a tool for simulating and analyzing.

The environmental load calculation apparatus according to the present embodiment is configured to be able to evaluate an environmental load simultaneously with design elements at an upstream stage of a design of a product, a component, or the like. A Life Cycle Assessment (LCA) is a typical method for evaluating environmental load. In this specification, a configuration in which the LCA is incorporated into the design and the design and the LCA are linked to each other is referred to as a "concurrent LCA". The concurrent LCA improves a function of an environmentally conscious design (eco-design) and promotes a development of products with a low environmental load. This eliminates the need to install another environmental load calculation apparatus.

In addition, it is possible to quantitatively evaluate a degree of achievement of the environmentally conscious design, and to present an evidence on a degree of contribution.

### [Example]

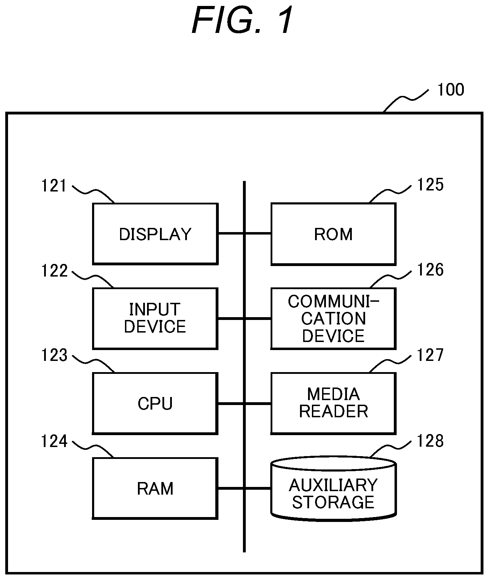

FIG. 1 is a configuration diagram illustrating a hardware of an environmental load calculation apparatus according to an Example.

In this drawing, the environmental load calculation apparatus 100 is implemented by a computer, and includes a display 121 (display unit), an input device 122 (input unit), CPU 123 (Central Processing Unit), RAM 124 (Random Access Memory), ROM 125 (Read Only Memory), a communication device 126, a media reading device 127, and an auxiliary storage 128. These may be installed in one place or may be distributed.

First, the CPU 123 can be realized by a so-called processor, and is a unit that executes various operations. The CPU 123 executes the various processes by executing an environmental load calculation program or the like loaded from the auxiliary storage 128 to the RAM 124.

Here, the environmental load calculation program is, for example, an application program executable on a program of an OS (Operating System). In the present Example, the environmental load calculation program includes a plurality of modules for each function, but may be realized by a plurality of independent programs for each function.

The environmental load calculation program may be installed in the auxiliary storage 128 from a portable storage medium via the media reading device 127, for example. That is, the environmental load calculation program can be stored in the storage medium. The CPU 123 may execute a process according to a program other than the environmental load calculation program. In this case, it is desirable to store this program in the auxiliary storage 128.

The RAM 124 is a memory that stores programs such as an environmental load calculation program executed by the CPU 123, and a data required to execute the programs. The ROM 125 stores programs, the OS and the like required for starting the environmental load calculation apparatus 100. The communication device 126 can be connected to a server, a storage, a portable terminal or the like installed outside the environmental load calculation apparatus 100 via a communication path. The communication path can be realized by a network such as an LAN (Local Area Network) or the Internet, and may be wired or wireless.

The media reading device 127 is a device that reads a data of a portable storage medium such as a flash memory or a CD-ROM.

The auxiliary storage 128 can be implemented by, for example, an HDD (Hard Disk Drive) or the like, and is a device that stores data and programs for executing various processes. Further, the auxiliary storage 128 may be realized by an SSD (Solid State Drive) using a flash memory or the like.

The RAM 124, the ROM 125 and the auxiliary storage 128 correspond to a database. The auxiliary storage 128 stores an environmental load calculation program, various kinds of information, data and the like.

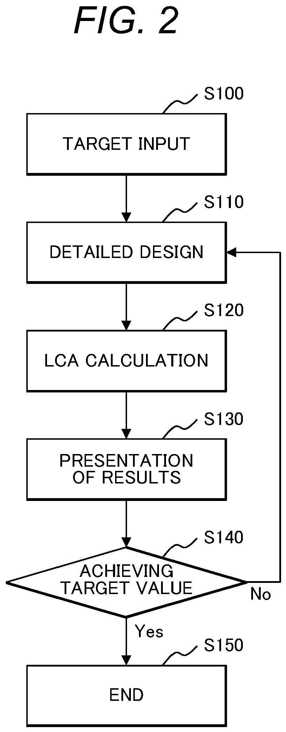

FIG. 2 is a flowchart illustrating a processing in the environmental load calculation apparatus according to the present Example.

In this figure, first, a target value of an LCA is inputted to the environmental load calculation apparatus (step S100). Next, a detailed design is performed (step S110). Then, the LCA is calculated based on a design result of a feature, a manufacturing process etc. of a material, a shape, a function etc. of components etc. constituting a product (step S120). Then, the calculated LCA is displayed on the display unit (step S130). The display unit may display data, drawings and the like of components etc. constituting the product.

Next, it is determined whether the calculated LCA has reached the target value of the LCA input in the step S100 (step S140). If the target value has been reached, the process is terminated (step S150).

On the other hand, if the target value has not been reached, the process returns to the step S110, the material, the shape, the function, the manufacturing process etc. of the components etc. constituting the product are changed, and the detailed design of the product is performed again. Thereafter, the step S120 to the step S140 are repeated. In this way, it is possible to determine whether or not the LCA can be achieved in the middle of the design, and to feed back the design.

The features other than the material, shape, function etc. of the components etc. include a type, a weight, an efficiency etc.

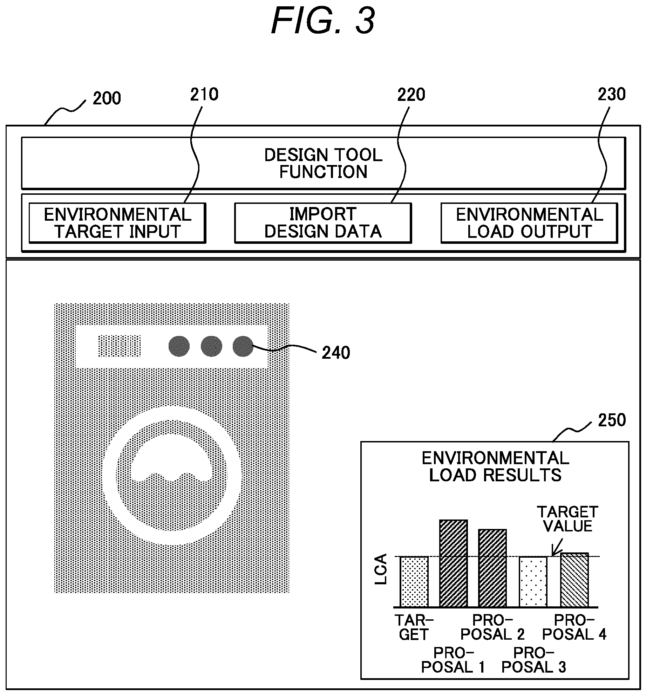

FIG. 3 is a diagram illustrating an example of an operation display of a design tool of the environmental load calculation apparatus according to the present Example.

On a display 200 shown in this figure, an environment target input 210, a design data acquisition 220, and an environment load output 230 can be selected as a design tool function. Also shown is a component 240 that is an object of a design and an LCA. In addition, a graph of environmental load results 250, which is a calculated result of the LCA, is displayed. The environmental load results 250 show the environmental load of Proposal 1, Proposal 2, Proposal 3 and Proposal 4 along with the target value of the LCA.

The user can input the environment target, check the environment load or the like by clicking etc. on the environment target input 210, the design data acquisition 220 and the environment load output 230 on the display 200, in addition to the design work of the component 240. That is, the user can calculate the environmental load and the like in parallel with the design work. In addition, the user can switch the screen display for components other than the component 240 to perform a design, a calculation of an environmental load, and the like.

Here, the environment target input 210 represents an input of a numerical value of the environment target value. The design data acquisition 220 represents the reading of the existing design data, specifically, the input of an attribute information such as a three-dimensional shape data, material, weight, and dimensions of a component or the like. The environmental load output 230 calculates a power consumption, an emitted amount of carbon dioxide (CO₂) and nitrogen oxides (NOₓ), the LCA, and the like, which are items of the environmental load, in accordance with the input of the environmental target input 210 and the design data acquisition 220. Data, calculation rules, calculation formulas and the like necessary for these calculations and the like are prepared separately and stored in a database. The environmental load result 250 is displayed by selecting the environmental load output 230.

As described above, the user can visualize and confirm the calculation result of the environmental load, the degree of achievement of the environmental target, and the like in addition to the shape etc. of the component.

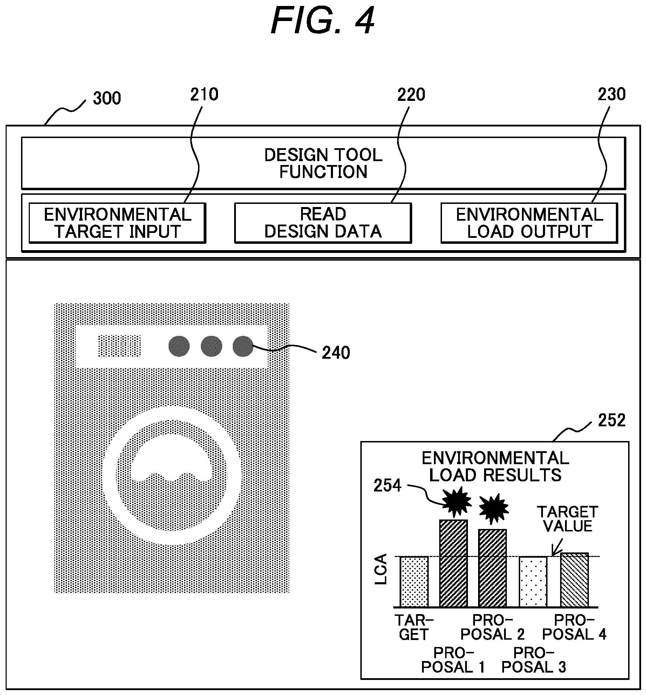

FIG. 4 is a diagram illustrating an example of a display when an alert is issued in a determination of an environmental load of the environmental load calculation apparatus according to the present Example.

On the display 300 shown in this figure, an alert 254 is issued in the Proposal 1 and the Proposal 2 of the environmental load result 252. The alert 254 indicates that the calculation result of the LCA is significantly greater than the target value and is unacceptable. The display other than the alert 254 is the same as the display 200 of FIG. 3.

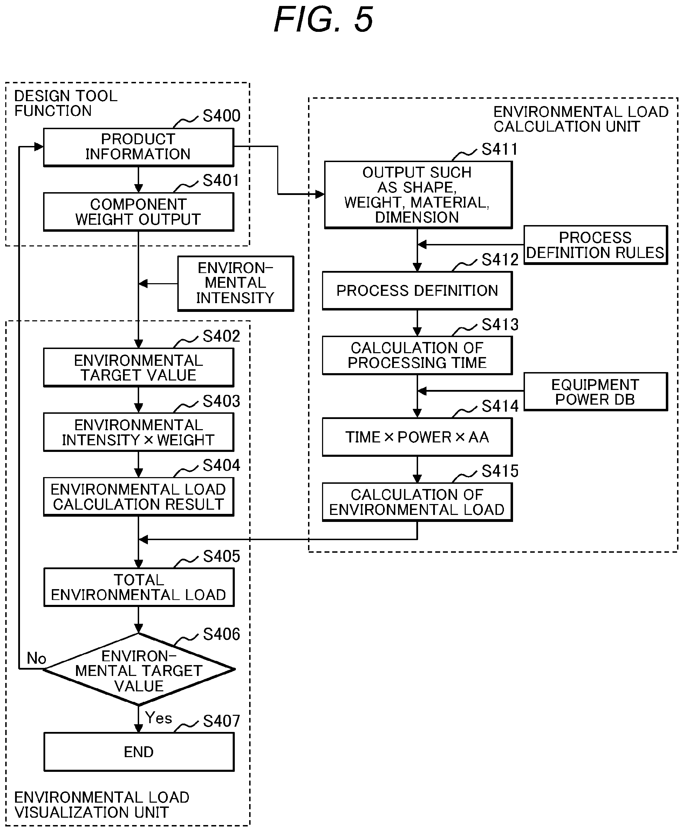

FIG. 5 is a diagram illustrating an overall configuration and a processing in each of constituent elements of the environmental load calculation apparatus according to the present Example.

The environmental load calculation apparatus shown in this figure includes a design tool unit (design tool function), an environmental load calculation unit, and an environmental load visualization unit.

In the design tool unit, a product information input from an input unit (not shown) or stored in a database or the like is acquired (step S400), and weights of components constituting the product are output (step S401).

In the environmental load calculation unit, the product information is acquired from the design tool unit, and shapes, weights, materials, and the like of the components constituting the product are output (step S411).

Next, a process is defined according to a process definition rule (step S412). Here, the process definition rule refers to a process assumed from a type and a capability of an equipment. For example, when a press device and a lathe device are installed in a line, a cutting process is performed after a press process.

Next, a processing time related to the processing is calculated (step S413). Then, a required data is acquired from a facility power database, and (time) × (power) × AA is calculated (step S414). Here, AA is a facility function, and indicates a relation between a process preparation time and a power at the time of the process preparation. The outcome of the step S414 is used to calculate the environmental load of the process (step S415).

The environmental load visualization unit acquires the product information and the weights of the components output in the step S401, and sets an environmental target value by using a data of an environmental intensity (step S402). Next, (environmental intensity) × (weight) is calculated for each of the components (step S403). The results of the step S403 are used to obtain the result of calculating the environmental load of each component (step S404). Then, the sum of the environmental loads is calculated using the calculation results of the step S404 and the step S415 (step S405).

Next, it is determined whether or not the value of the environmental load has reached the environmental target value (step S406). Here, the value of the environmental load may be each of the components, each of the processes, or a total value thereof.

If the environmental target value has been reached in the step S406, the process is terminated (step S407).

On the other hand, when the environmental target value has not been reached in the step S406, the step S400 is returned to prior to the completion of the design, and the specifications of the components of the product, the manufacturing processes, and the like are changed in the design tool unit. Then, the design of the product is performed again and adjusted so as to reach the environmental target value.

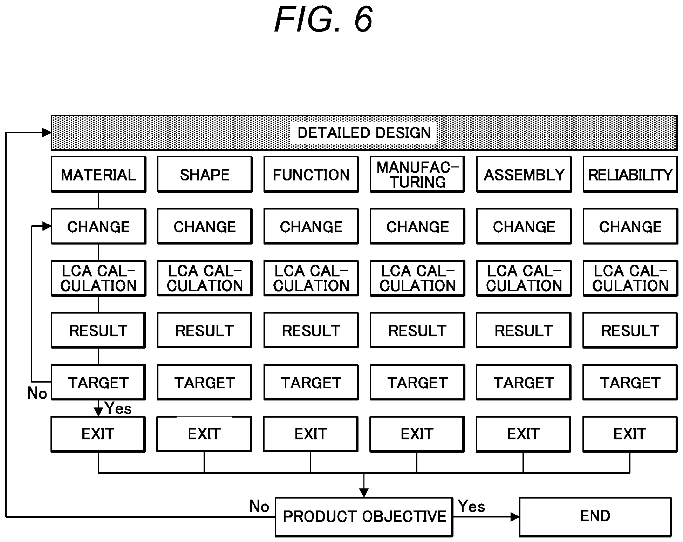

FIG. 6 is a diagram illustrating a processing in the environmental load calculation apparatus according to the present Example.

In the detailed design shown in this figure, the materials, shapes, and functions of the components constituting the product and the manufacturing process are examined and adjusted, respectively. The assembling process of the product and the reliability of the product and components are also examined and adjusted.

Then, an LCA is calculated for each of the design data adjusted in the detailed design, and it is determined whether the result reaches the environmental target value. If the target value has been reached, the detailed design is completed. On the other hand, when the target value has not been reached, the design data is changed and adjusted so as to reach the target value.

Thereafter, it is determined whether or not the overall environmental target value of the product has been reached. In this case as well, if the environmental target value has been reached, the process ends. This completes the design of the product. Here, the overall environmental target value of the product may be the total value of the environmental load of the component, the process and the like.

If the total environmental target value of the product has not been reached, the process returns to the detailed design and the components, processes, etc. are reviewed.

In this figure, the LCA is calculated for the material of the component at the left end of the figure, and the determination is made as to whether or not the environmental target value has been reached, and a flow to apply a feedback is shown. In addition, calculation, determination, feedback, etc. are also performed in the same manner on the shape, the function, the manufacturing process etc. of the component, an assembly process of the product, the reliability of the product and the component etc.

In the present Example, the calculation of the LCA is described as an example of the calculation of the environmental load, but the calculation method of the environmental load may be other than the LCA, and may be, for example, a CFP (carbon footprint), Scope 3, or the like.

According to the present disclosure, an examination, an acquisition and the like of the design data that is not necessarily required for the environmental load evaluation become unnecessary, and it is possible to prevent a similar design work from being performed redundantly. As a result, the environmental load of the product can be reduced, and the time required to design the product can be shortened.

### List of Reference Signs

100: environmental load calculation apparatus, 121: display, 122: input device, 123: CPU, 124: RAM, 125: ROM, 126: communication device, 127: media reading device, 128: auxiliary storage, 200, 300: display, 210: environmental target input, 220: design data acquisition, 230: environmental load output, 240: component, 250, 252: environmental load result, 254: alert.

## Claims

1. An environmental load calculation apparatus comprising:
a design tool unit that designs at least one of a product and a component constituting the product;
an environmental load calculation unit that calculates an environmental load of at least one of the product and the component; and
an environmental load visualization unit that displays the environmental load,
wherein the environmental load calculation unit calculates the environmental load based on at least one of a configuration, a function, a manufacturing process, and a reliability of the component, and an assembly process and a reliability of the product, and
when the environmental load has not reached a target value, the design tool unit executes the design again before the design is completed.

2. The environmental load calculation apparatus according to claim 1,
wherein at least one of the design tool unit, the environmental load calculation unit, and the environmental load visualization unit are configured to be able to input the target value of the environmental load.

3. The environmental load calculation apparatus according to claim 1,
wherein when the environmental load has reached the target value, the design tool unit ends the design.

4. The environmental load calculation apparatus according to claim 1,
further includes a database which accumulates a data used for calculating the environmental load.

5. The environmental load calculation apparatus according to claim 1,
wherein the environmental load visualizing unit outputs a difference between the environmental load and the target value.

6. The environmental load calculation apparatus according to claim 1,
wherein the environmental load visualization unit outputs an alert when the environmental load has not reached the target value.

7. The environmental load calculation apparatus according to claim 1,
wherein the environmental load includes one or more of a life cycle assessment, a power consumption, and emissions of carbon dioxide and nitrogen oxide.

8. The environmental load calculation apparatus according to claim 1,
wherein the configuration of the component includes at least one of a material, a weight, and a shape of the component.
